# EUROPEAN PATENT APPLICATION

(11) **EP 4 417 997 A1**
(43) Date of publication of application: **21.08.2024**
(21) Application number: 24154212.5
(22) Date of filing: 26.01.2024
(51) Int. Cl.: G01S 5/02, G01S 5/16, G01S 5/18, G06F 21/32, G06F 21/36, G06Q 20/32

(54) **MOBILE GEOGRAPHIC VALIDATION**

(30) Priority: 17.02.2023 GB 202302296
(71) Applicant: Global Blue S.A., 1274 Signy (CH)
(72) Inventor: AUER, Clemens, 1274 Signy (CH); SERAJI, Setayesh, 1274 Signy (CH); KLETZER, Viktor, 1274 Signy (CH)
(74) Representative: D Young & Co LLP

(57) **Abstract**

There is provided an apparatus in which a capture device performs a capture operation on an environment local to the apparatus to produce an incoming signal. Processing circuitry performs processing of the incoming signal to produce an identifier and communication circuitry sends the identifier to a server together with data that is separate from the identifier. The communication circuitry transmits the identifier to the server within a predetermined period of the capture device having performed the capture operation. Also provided is a system in which processing circuitry performs processing of an identifier to generate a signal in which the identifier is encoded. An output device outputs the signal and output circuitry outputs the identifier to verification circuitry. The verification circuitry performs a verification process in which the identifier received from the output circuitry is compared with a candidate identifier received from a user. The processing circuitry changes the identifier with a predetermined frequency.

## Description

The present technique relates to validating the geographic location of a user.

In some situations, such as those involving security and/or customs, it is desirable to confirm that a user is at a particular location.

Viewed from a first example configuration, there is provided an apparatus comprising: a capture device configured to perform a capture operation on an environment local to the apparatus to produce an incoming signal; processing circuitry configured to perform processing of the incoming signal to produce an identifier; and communication circuitry configured to send the identifier to a server together with data that is separate from the identifier, wherein the communication circuitry is configured to transmit the identifier to the server within a predetermined period of the capture device having performed the capture operation.

Viewed from a second example configuration, there is provided a method comprising: capturing an environment local to the apparatus to produce an incoming signal; processing the incoming signal to produce an identifier; and sending the identifier to a server together with data that is separate from the identifier, wherein the identifier is transmitted to the server within a predetermined period of the capturing.

Viewed from a third example configuration, there is provided a system comprising: processing circuitry configured to perform processing of an identifier to generate a signal in which the identifier is encoded; an output device configured to output the signal; and output circuitry configured to output the identifier to verification circuitry, the verification circuitry being configured to perform a verification process comprising comparing the identifier received from the output circuitry with a candidate identifier received from a user, wherein the processing circuitry is configured to change the identifier with a predetermined frequency.

Viewed from a fourth example configuration, there is provided a method comprising: performing processing of an identifier to generate a signal in which the identifier is encoded; outputting the signal; outputting the identifier to verification circuitry, the verification circuitry being configured to perform a verification process comprising comparing the identifier received from the output circuitry with a candidate identifier received from a user; and changing the identifier with a predetermined frequency.

The present technique will be described further, by way of example only, with reference to embodiments thereof as illustrated in the accompanying drawings, in which:
Figure 1 illustrates a user mobile device, which is an example of the claimed data processing apparatus;
Figure 2 shows the series of operations and communications that occur between the user mobile device, the kiosk, and the server;
Figure 3 illustrates the process of performing the image capture and transmitting the identifier in a period of time (z) less than a predetermined period;
Figure 4 illustrates an example of how the identifier may be generated and used to produce an image;
Figure 5 illustrates an example in which a number of identifiers can be provided in order to better prove that the user is present at the kiosk;
Figure 6 illustrates an embodiment in which wireless communications are used to verify the location of the user;
Figure 7 illustrates wireless connectivity being provided by a kiosk; and
Figure 8 illustrates an example in which the identifier can be rapidly changed.

Before discussing the embodiments with reference to the accompanying figures, the following description of embodiments and associated advantages is provided.

In accordance with one example configuration there is provided an apparatus comprising: a capture device configured to perform a capture operation on an environment local to the apparatus to produce an incoming signal; processing circuitry configured to perform processing of the incoming signal to produce an identifier; and communication circuitry configured to send the identifier to a server together with data that is separate from the identifier, wherein the communication circuitry is configured to transmit the identifier to the server within a predetermined period of the capture device having performed the capture operation.

In these examples, the capture device is used to capture an environment close to the apparatus itself and generate a signal. The signal is then processed by the processing circuitry. That processing results in the generation of an identifier. Having produced the identifier, it is sent by the apparatus (specifically the communication circuitry) to a server. The identifier is sent together with additional information. The identifier is sent to the server within a predetermined period of the capturing device having captured the local environment. As a consequence of this process, the identifier can used by the server to determine whether the apparatus really did capture a signal corresponding with the local environment or not. In this way, it is possible to determine whether the apparatus really was at the local environment at a particular moment. In combination with the additional data that is transmitted, it is possible to validate whether the data was delivered by a user when that user was at a particular geographical location, without any particular geographical detection information being provided by or obtained by the user. This can be useful in applications involving customs and tax free shopping for instance.

In some examples, the capture device is an image capture device and the incoming signal is an image; and the image comprises an optically machine-readable image. An optically machine-readable image is one in which a data processing device can, through optical patterns, determine the identifier from the image itself with little or no chance of ambiguity as to the identifier that is represented. This differs from human-readable images which may contain an identifier that is understandable by a human. Images containing human languages may constitute the latter while the former may include barcodes, QR codes, and so on. In other embodiments, the signal could be a human imperceptible signal such as a Bluetooth signal or NFC signal.

In some examples, the image comprises a barcode. A barcode can be considered to include a series of pixels in which each pixel is encoded in one of two ways. Typically, a barcode may be black and white, for instance, in order to provide significant contrast between white pixels and black pixels. The pixels of a barcode may be encoded as a series of stripes so that the resolution of a scanning device need not extend to the individual pixel level. The stripes themselves may represent different numbers for instance. For example, the width of each stripe could represent a digit of the identifier, with a thicker stripe representing a larger digit. Another technique would be to separate each digit into a series of two sub-stripes, with each sub-stripe having a thin thickness, a medium thickness, or a large thickness. With three possible values for each sub-stripe, each digit could then have nine possible values, which could represent digits 1-9. By reading the series of stripes, it would be possible to read the barcode identifier. A barcode may also include a checksum, which is a number that is produced by a combination of the other digits. This help to verify that the sequence has been read correctly.

In some examples, the image comprises a 2D barcode. A 2D barcode may include pixels in two dimensions, for instance. This can allow for an overall smaller area to be used for encoding the same amount of information that might be present in a 1D barcode. An example of a 2D barcode would be a QR code, for instance.

In some examples, in response to the communication circuitry failing to send the identifier to the server together with the data within the predetermined period, the capture device is configured to perform the capture operation again. That is, having generated a signal, if the identifier is not obtained and then transmitted to the server within a particular period of time, then the process is repeated. This helps to ensure that the identifier was sent to the server within a particular period of the signal being generated via the capture device. This can help to avoid issues such as relaying where one user generates the signal, and provides it to a second user for the second user to provide as proof that they are at the local environment, since multiple images would need to be relayed within the timeframe. In some examples, even if the user is able to transmit the identifier to the server outside the predetermined period of time, the server may be configured to reject the provided identifier. This can be achieved by the server having some knowledge of a point in time until which the identifier was provided in the local environment.

In some examples, the capture device is configured to perform a plurality of capture operations in order to produce a series of incoming signals including the incoming signal; the processing circuitry is configured to perform processing of the series of incoming signals; and the processing circuitry is inhibited from transmitting the identifier until the identifier changes in the series of incoming signals. In these examples, the processing circuitry 'watches' the local environment until the identifier changes at which point the identifier is sent to the server. This helps by causing the apparatus to transmit the identifier quickly after the identifier changes, which allows the identifier to change with higher frequency thereby improving security by limiting the ability for the identifier to be relayed to another user.

In some examples, the capture device is configured to produce a series of incoming signals including the incoming signal; the processing circuitry is configured to perform processing of the series of incoming signals to produce a series of identifiers; and the processing circuitry is configured to transmit the series of identifiers to the server, wherein the series of the identifiers is contiguous. In these examples, a series of identifiers from a series of signals are provided to the server. When the identifier changes with relatively high frequency, this can be used to verify that the user was at the local environment for a defined period. This can be used for, for instance, obtaining CCTV footage to verify that the user was present over the course of the defined period.

In some examples, the communication circuitry is wireless communication circuitry that communicates with the server using WiFi. In other embodiments, the wireless communication circuitry could use BlueTooth or another wireless standard. By using WiFi, it is possible to better verify the user's location since only a user that is local to the wireless communication circuitry that forms part of the apparatus would be able to connect via WiFi.

In some examples, the wireless communication circuitry is configured to connect to a base station that transmits below its maximum transmission power. In these examples, the base station is not attempting to maximise the range at which transmission occurs, but rather limit it to a highly localised area. Since the transmission power is not maximised, it is possible to control the distance with which the user can connect via the apparatus.

In some examples, the data comprises a value added tax in relation to goods held by the user. A value added tax (VAT) can be charged at a time that goods are purchased by the user. It is not uncommon for countries to allow this VAT to be refunded by nonresidents. Therefore, by providing the VAT information at a point of departure of the country (e.g. in an airport) and by providing proof that the user is actually at the airport (via the identifier and/or connection via WiFi) it is possible to say with some degree of certainty that the user intends to export the purchased goods out of the country and that the paid VAT can therefore be refunded to the user.

In accordance with another example configuration there is provided a system comprising: processing circuitry configured to perform processing of an identifier to generate a signal in which the identifier is encoded; an output device configured to output the signal; and output circuitry configured to output the identifier to verification circuitry, the verification circuitry being configured to perform a verification process comprising comparing the identifier received from the output circuitry with a candidate identifier received from a user, wherein the processing circuitry is configured to change the identifier with a predetermined frequency.

The processing circuitry of the system is used to generate a signal from an identifier. The signal is generated in such a way that it is possible for the identifier to be extracted by another device on receiving the signal. The signal is output via the output device (thus enabling another device to receive the signal). Output circuitry is used to output the identifier to verification circuitry, e.g. to the previously described server. The verification circuitry is able to compare the identifier with a candidate identifier transmitted by a user on receiving and decoding the signal. Consequently, it is possible to verify that the user was within range of the output device in order to receive the identifier. The processing circuitry is configured to change the identifier with a predetermined frequency to discourage and inhibit caching of the signal. In other words, it prevents a user from claiming to currently be at the system when they were actually at the system some time previously and are simply reusing the identifier.

In some examples, the output device is a display device and the signal is an image; and the image comprises an optically machine-readable image. As previously explained, an optically machine-readable image is one in which the encoded identifier can be extracted by a data processing apparatus reliably and with low effort by visually analysing the image and looking for predetermined patterns. This differs from a human readable image in which parts of the image can be interpreted by a human in order to provide meaning that might otherwise be ambiguous or debatable.

In some examples, the image comprises a barcode. As previously described, a barcode can be considered to be a series of images or stripes having a contrast so that one set of pixels differs from a second set of pixels. For instance, a barcode may be black and white, thereby providing high contrast between white pixels or stripes and black pixels or stripes. The black and white stripes signify different meanings and collectively their sequence can be equated to a particular identifier.

In some examples, the image comprises a 2D barcode. As previously explained, a 2D barcode has pixels in multiple dimensions and thus can encode more information within the area than is typically achieved with a 1D barcode. An example of a 2D barcode is a QR code.

In some examples, the system comprises the verification circuitry, wherein the verification circuitry is configured to cause the processing circuitry to change the identifier and to regenerate the signal in response to the verification process being successful. Each time the verification process succeeds, the identifier can be changed. This makes it difficult for multiple users to all use the same image. Thus, one user cannot use the identifier and then immediately provide it to another in order to 'prove' that they are also geographically present since the identifier 'expires' on being correctly used.

In some examples, the system comprises: the verification circuitry, wherein the verification circuitry is configured to cause the processing circuitry to change the identifier and to regenerate the signal in response to receiving a validation request from the user, regardless of an outcome of the verification process. In these examples, rather than only expiring the identifier when the process is successful, the verification circuitry causes the identifier to change each time an attempt is made by a user to verify their geography. Thus, if the process fails for any reason (such as not being correctly connected to an appropriate WiFi or network, or the other data not validating correctly), then the identifier is reset thereby causing the signal to be regenerated and also causing the user to reobtain the identifier. Thus, the user must remain present until such time as the process is performed correctly.

In some examples, the identifier comprises a value that is one-way encrypted using a private key; and the comparing the identifier received from the output circuitry comprises measuring a distance between the value encrypted in the identifier received from the output circuitry and the value encrypted in the candidate identifier and asserting that there is a match in response to the distance being less than a predetermined distance. In these examples, the identifier is encrypted. This has a number of effects. Firstly, the value itself is not known to the user, since the user is not able to decrypt the value in the identifier. Consequently, the user cannot guess at the value, given previous identifiers, because the previous values of the previous identifiers cannot be obtained. Secondly, the identifier is likely to change significantly even as a consequence of the value changing slightly. This helps to prevent guessing at the identifier that is to be returned by the user. Thirdly, it makes it possible for the frequency with which the identifier is changed to change much more quickly. This is because the value can follow a predetermined pattern. In doing so, because the user does not know what the value actually is, it is possible for a user to provide a recent, but non-current identifier. For instance, the user might provide an identifier that is N identifiers old. It can be assumed that the user must have seen this identifier because the value component cannot be guessed. Since an older identifier can be provided, the image can be changed very rapidly. This again makes it harder for a user to 'piggy back' or relay the image. The distance back that is accepted can be chosen to be too small for message relaying to take place, but large enough that a user can capture an image, process the identifier, and transmit it to the server.

In some examples, the system comprises: wireless communication circuitry configured to connect to the user and to receive a verification request, comprising the candidate identifier and data separate from the candidate identifier, from the user and to provide the candidate identifier to the verification circuitry. It is therefore possible to provide additional verification that the user is local by requiring the user to wirelessly connect to the system that also shows the image containing the identifier.

In some examples, the wireless communication circuitry is configured to connect to the user via WiFi. In other examples, the wireless communication can be provided via BlueTooth, for instance.

In some examples, the verification process comprises determining whether the user is connected via the wireless communication circuitry. When the user provides the data and the identifier, it is possible to determine whether an IP address from which the user is connected is local to the system. This prevents the user from connected from, for instance, a cellular connection or from another WiFi network altogether. If the user is not connecting locally (e.g. via the same WiFi network provided by the system) then there is less verification that the user is connecting locally and so the user's request might be refused or treated with increased scrutiny.

In some examples, the verification process determines that the user is connected via the wireless communication circuitry when the user is on a same subnet as the system. For example, a user may be considered to be local provided the first three values of the IP address are the same. For instance, if the system is connected with an IP address of 192.168.55.89 and the first three parts of the user's IP address are 192.168.55 then the user can be considered to be local. In some embodiments, 'local' is considered to be the extent to which a broadcast by a user or another service is transmitted.

In some examples, the wireless communication circuitry is configured to connect to the user using a transmission power lower than a maximum transmission power. By not transmitting at a maximum power, the system is more able to communicate with users that are in local proximity to the system thereby helping to verify that they are geographically near the system rather than further away (e.g. from behind a door or wall).

In some examples, the data separate from the candidate identifier comprises a value added tax for goods held by the user; and the verification circuitry is configured to cause the value added tax to be refunded by the user in response to the verification process being successful. As previously explained, the present techniques are applicable to a scenario in which a user requests a refund of VAT for purchased goods. In these examples, if the user is able to verify that they are present (e.g. at the system), which itself may be at a customs station where it is considered to be likely that the user is leaving the country, then the requirement that the user exports the goods can be considered to be met. Provided other requirements are also met (e.g. that the user and the goods are eligible for a refund) then this success can cause the VAT refund to proceed.

Particular embodiments will now be described with reference to the figures.

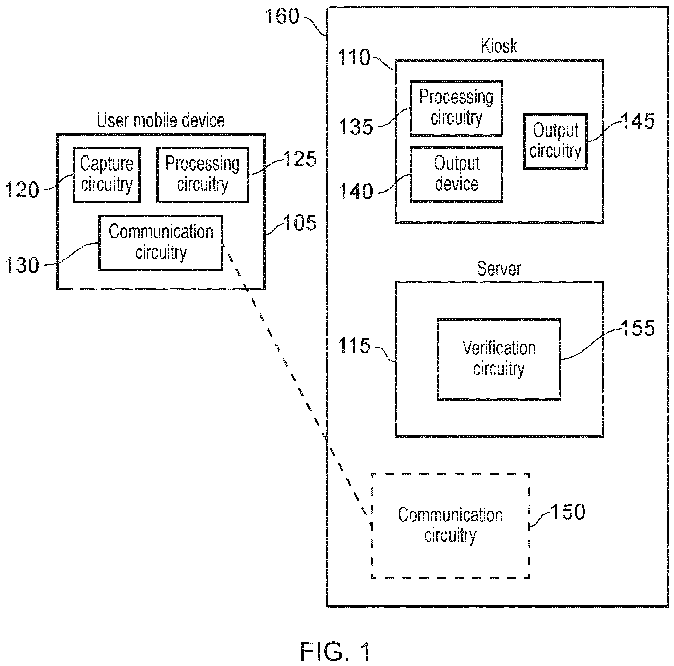

Figure 1 illustrates a user mobile device 105, which is an example of the claimed data processing apparatus. The user mobile device 105 might take the form of a mobile phone, a mobile tablet, or other portable computing device that can be carried by a user. The user mobile device includes capture circuitry 120, which could take the form of a CCD or camera for instance. This is used to take an image of the local environment including an image generated by the kiosk 110 and shown on the display device 140 for instance. Processing circuitry 125 processes the image that is obtained and this is used to generate an identifier, which is transmitted via communication circuitry 130 to a system 160 and specifically to communication circuitry 150 of that system 160.

The system 160 includes a kiosk 110, which generates the signal that is captured by the capture circuitry 120 of the user mobile device 105. In particular, an image is generated using processing circuitry 135 of the kiosk 110 so as to encode an identifier within the image. The image is then shown on an output device 140 (e.g. a screen or monitor) to be captured by the image capture circuitry 120.

The system 160 also includes a server. This could, in practice, form part of the kiosk 110 or could be distinct from the kiosk 110. The server 115 includes verification circuitry, which receives both the identifier from the processing circuitry 135 and a candidate identifier that is transmitted by the communication circuitry 130 of the user mobile device 105 and compares the two identifiers to see if they are the same.

In theory, a user should only be able to obtain the identifier by being within visual range of the display device 140 in such a way that the user can use the image capture device 120 to capture an image of the local environment including the display device 140 and decode the image to produce the identifier. A user that is not in visual range has no way to see and decode the image, and the identifier is not made available in any other way. Obtaining the identifier can therefore act as evidence that the user is geographically close to the kiosk 110. This can be verified by the user providing the decoded identifier to the system 160 - specifically to verification circuitry 155 in a server 115 of the system. The verification circuitry 155 is also provided with the identifier in its raw form from the processing circuitry 135 of the kiosk. Thus, if a candidate identifier supplied by the user 105 is the same as the identifier provided by the processing circuitry 135 then it can be concluded that the user is close to the kiosk.

Note that the location of the server and the verification circuitry relative to the kiosk is relatively unimportant and indeed, the verification circuitry could be part of the kiosk itself. The communication circuitry 150 could be part of the kiosk 110, or part of the server 115 or could be a separate part of the system 160. Importantly, the communication circuitry 150 is provided so that the verification circuitry 155 can receive the candidate identifier from the user mobile device 105.

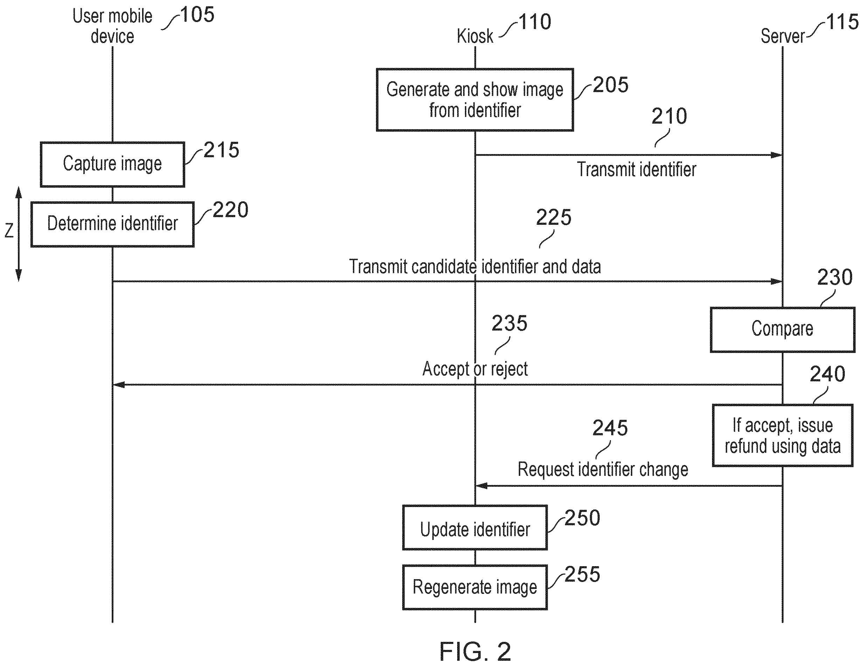

Figure 2 shows the series of operations and communications that occur between the user mobile device 105, the kiosk 110, and the server 115. In this example, the kiosk (which may simply be a QR display device with some processing circuitry) is placed in an airport in a customs area in order to validate that a user is leaving a country so as to issue a tax refund for goods that have been purchased by the user as a visitor (non resident) to the country. Again, as previously explained, the kiosk 110 and the server 115 need not be separate devices and could be combined into a single system 160.

The process starts at a step 205 in which the kiosk 110 generates and shows an image by encoding an identifier into a machine-readable form such as a QR code. The identifier can then be transmitted at a step 210 to the server 115. This step need not happen immediately, but happens before the comparison step 230 happens at the server. In any event, at a step 215 the image with the identifier encoded within it is captured (e.g. by the image capture circuitry 120 of the user mobile device 105) and then at step 220 processed so as to extract the identifier. The user mobile device 105 then transmits the candidate identifier and some extra data at a step 225 to the server 115. The extra data can include the data that is required to perform the tax refund. For instance, this might include proof of residency, details of the goods that have been purchased, where they have been purchased, how much tax (VAT) has been paid and refund details (such as a payment account). Having received the candidate identifier from the user mobile device 105 and the identifier from the kiosk 110, the server 115 is able to compare the two to determine whether they are the same. If so, an accept or reject signal can be sent back to the user mobile device 105 at step 235. If the candidate identifier is accepted, then at step 240, a refund can be issued using the extra data that was provided - or in some embodiments, the proof of export can be accepted and further checks to determine eligibility can be performed. At step 245, regardless of the outcome of the identifier check, the kiosk 110 is made to change the identifier. Therefore at step 250, the identifier is updated and at step 255 the image is regenerated. In addition, the identifier may be updated periodically as well.

By altering the identifier each time an attempt is made to provide a candidate identifier, it is possible to minimise the opportunities for fraudulent requests to be provided. In some embodiments, the identifier may only be changed when the candidate identifier matches the actual identifier.

Note that in these embodiments, the time (z) taken between the capturing of the image at step 215 and the transmission of the candidate identifier and data at step 225 is less than a predetermined period. If the predetermined period is missed, then the image capture step 215 may be performed. This helps to ensure that the user was in the presence of the kiosk (to obtain the identifier) recently.

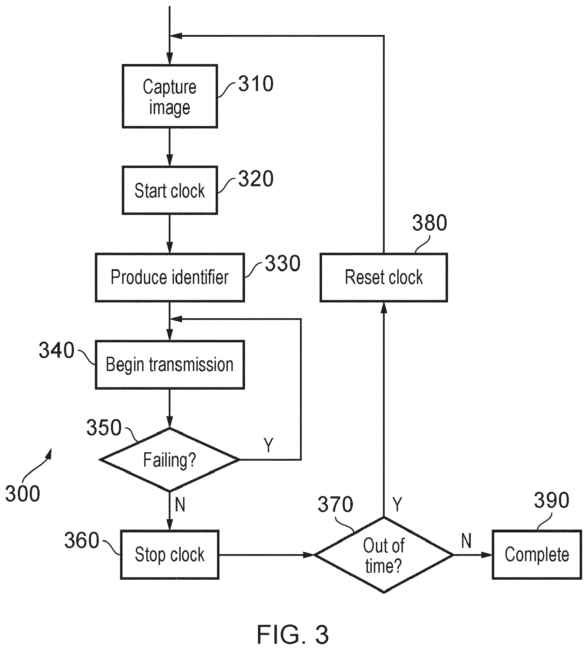

Figure 3 illustrates the process of performing the image capture and transmitting the identifier is a period of time (z) less than a predetermined period. The flow is illustrated in the form of a flow chart 300. At a step 310, the image capture process is performed. At a step 320, an internal clock is started. At a step 330, the identifier is generated from the image. Then, at a step 340, the transmission process behinds. If, at step 350, it is determined that the transmission process is failing or is going to fail, then the transmission begins again at step 340. Otherwise, if the transmission is going to complete then the clock steps at step 360. If, at step 370, the predetermined period has expired (e.g. if there is insufficient time), then at step 380 the clock is reset and the process returns to step 310 for a new image to be captured. Otherwise, at step 390 the process is completed.

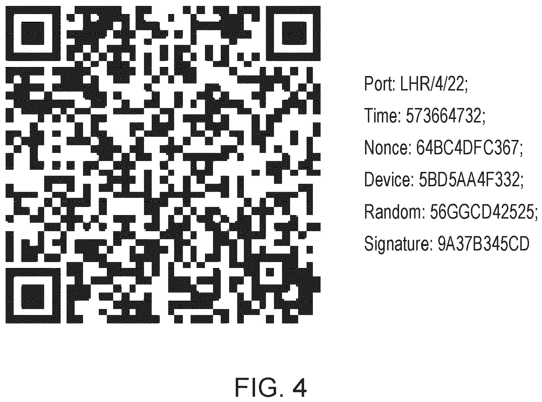

Figure 4 illustrates an example of how the identifier may be generated and used to produce an image. In Figure 4, the identifier is made up of a number of constituent parts. These include an identity of an exit point for the country - in this case made up from an airport identifier, a terminal, and an 'exit' within that terminal. The parts also include a time. The time need not be `live' but could instead simply be a time at which the identifier was generated. In some examples, the time is kept up-to-date and this can be achieved by altering the accuracy with which the time is given. For instance, the time may only give a date, hour, and minutes (without seconds) and may be updated every minute. In this example, the identifier is also made up from a nonce (a number used once), which is incremented in step 250 of Figure 2 (e.g. when an identification process is performed correctly). In this example, the nonce is padded (e.g. with a salt) and is encrypted. Thus, the nonce can simply increment while the value produced from the none that makes up the identifier can change significantly. This makes it very difficult for a user to determine what the nonce value should be, given a previous value of the identifier. In this example, the identifier also includes a device identifier, which is a unique or pseudo-unique identifier given to the kiosk. In this way it is possible to provide an audit trail for the identification process. A random number is also included as part of the identifier. Finally, in this example, a signature is provided. This is an encrypted version of the rest of the identifier. By providing the signature it is possible to say with reasonable certainty whether part of the identifier has been altered because a modification of (for instance), the random number would lead to an identifier that does not match the signature.

In this example, all of the parts of the identifier are concatenated together as a string in order to produce a QR code, which is the image. The exact process used to generate the image is unimportant provided the algorithm is known to the user mobile device 105. Consequently, other machine-readable images can also be produced in dependence on the exact nature of the identifier to be generated. For instance, a barcode may be provided, but it is likely that a barcode would provide significantly less data that can be encoded.

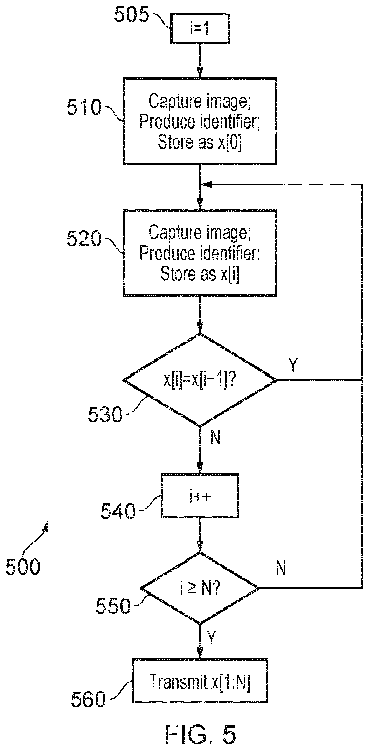

Up until this point, it has been assumed that the process can be completed by verification of a single identifier. Figure 5 illustrates an example in which a number of identifiers can be provided in order to better prove that the user is present at the kiosk 160. In addition, the process shown in Figure 5 is such that even a rapid change in identifier/image can be responded to, thereby making it possible to cycle the identifier more quickly. The process is illustrated in the form of a flowchart 500, which illustrates the behaviour of a user mobile device 105.

At a step 505, the value 'i' is set to 1. The value 'i' is used as an index to access an array of stored identifier values. At a step 510, a first image is captured and used to produce an identifier, which is stored as x[0]. Then at a step 520, another image is captured and from that image, another identifier is produced. This is stored at a position x[i]. At a step 530, it is determined whether the identifier at position x[i] is the same as that at position x[i-1]. If so, then the image has not changed and the process returns to step 520. Otherwise, the image has changed in the most recent iteration (i.e. very recently) and the process proceeds to step 540 where the value of 'i' is incremented. Then, at step 550, it is determined whether i is greater than or equal to N, the number of identifiers that are required to be provided. This information can be provided as part of application running on the user mobile device or as part of the encoding of the QR code for instance. If not, then the process returns to step 520 to await the next identifier. Otherwise, the process proceeds to step 560 where identifiers 1 through N are provided to the verification circuitry 155.

The verification circuitry 155 also receives the identifiers from the kiosk 110 and compares each identifier given by the kiosk with the equivalent candidate identifier provided by the user mobile device 105. If all of the identifiers match then the user is verified as being present. Otherwise, the user is not considered to be present. In some embodiments, it may only be necessary for some of the identifiers to be match.

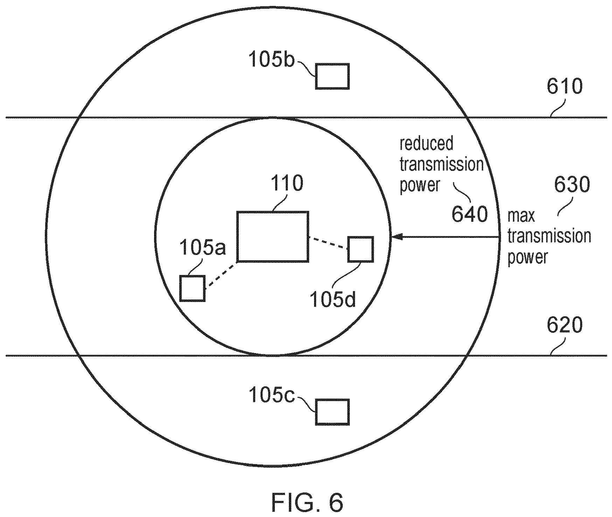

Figure 6 illustrates an embodiment in which wireless communications are used to verify the location of the user. Here, the communication circuitry 150 of the kiosk 110 or system 160 takes the form of wireless communication circuitry 150, which provides WiFi connectivity to users 105. The transmission power 640 of the wireless communication circuitry 150 is reduced from its maximum power 630. As a consequence of this, only users 105a, 105d that are in close proximity of the kiosk 110 are able to connect to the WiFi. In contrast, users 105b, 105c that would be within range of the maximum transmission power 630 but are, for instance, behind walls 610, 620 are unable to connect to the kiosk 110.

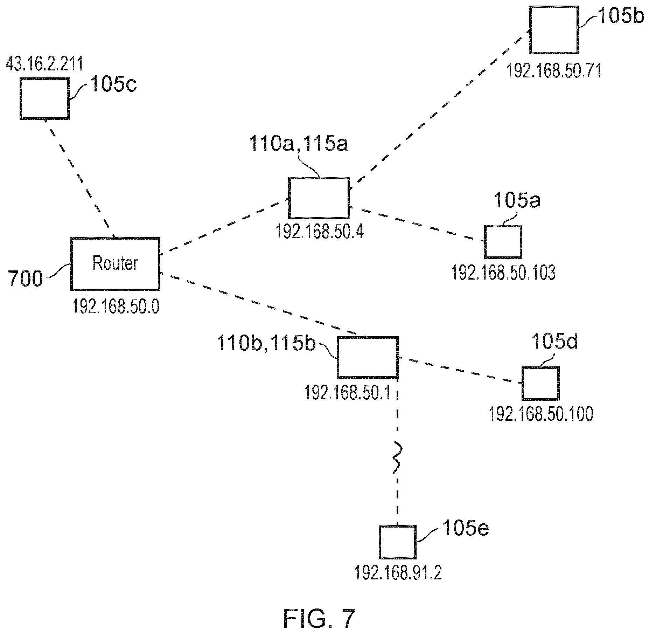

In these embodiments, the kiosk can be configured to only accept candidate identifiers from users that are part of the local network presented by the kiosk 110. This is illustrated in Figure 7 in which a kiosk 110a, 115 directly connects to a pair of other user mobile devices 105a, 105b by virtue of its communication circuitry 150. In this example, the kiosk has an IP address of 192.168.50.4 and the two user mobile devices have IP addresses of 192.168.50.103 and 192.168.50.71 respectively. The kiosk 1105, 115a also connects to a router 700. Via the internet, another user 105c connects to the router and has an IP address of 43.16.2.211. The user 105c that is connected via the internet is not considered to be local because it is on a different subset to that of the kiosk. For instance, at least one of the three first parts of the two IP addresses differ. This user 105c will therefore not be permitted to send candidate identifiers to the kiosk 110a, 115a. This is desirable behaviour because it cannot be determined (using the wireless communication circuitry 150) whether the user is in fact local or not.

As a further example, the router 700 is connected to another kiosk 110b, 115b with an IP address of 192.168.50.1 (and therefore part of the same subset as the first kiosk 110a, 115a). A further users 105d is connected to this second kiosk 110b, 115b with an IP address of 1982.168.50.100. This is again part of the same subnet and so the user will be permitted to transmit candidate identifiers to the first kiosk 110a, 115a despite not being directly connected to it. However, in contrast, another user 105e is connected to the second kiosk 110b, 115b, through a number of other devices (not shown). The 'distance' between this user 105e and the 110a, 115a is sufficiently large that the user is assigned to a different subnet and has an IP address of 192.168.91.2 (note that the third component of the IP address differs from that of the first router 110a, 115a). Consequently, this user mobile device 105e is not permitted to send candidate identifiers to the first kiosk 110a, 115a.

By enforcing such restrictions, it is possible to limit the physical distance that the user can be from the kiosk in order to submit candidate identifiers. Some distance may be permitted, such that a user is connected via another kiosk, but this may not extend infinitely and in particular, connections via the wider internet are prohibited. In some embodiments, connections that are not directly with the kiosk to which the candidate identifiers are being transmitted are not permitted at all.

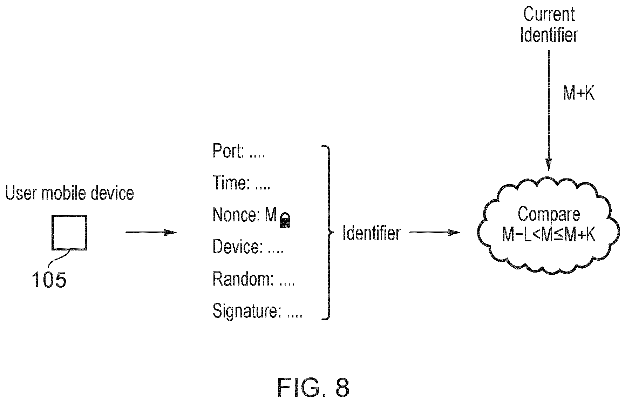

Figure 8 illustrates an example in which the identifier can be rapidly changed. In this example, the user mobile device 105 captures an image and extracts the identifier in any manner previously described. The identifier may contain a number of elements. In this example, one of the elements is a nonce, having a value of M, which is encrypted. In contrast, the current value of the nonce as reported by the kiosk 110 is M+K. This difference may occur due to the time taken to extract the identifier and transmit it. K is likely to be larger as the frequency with which the nonce is changed is increased.

In this example, the user mobile device 105 is not expected to produce an identifier having the nonce value of M+K. Indeed, the rotation of the nonce may be sufficiently high that it is impractical for the user to provide such an identifier due to the time taken to extract the identifier and transmit it. Consequently, the verification circuitry 155 permits the nonce to fall within the range of being greater than M-L and less than or equal to M+K. The value "L" is some tolerance value that can be set to control how tolerant the verification circuitry 155 is. Larger values increase the probability with which the image/identifier can be relayed to another device in order to give the impression of being present at the kiosk 110. In contrast, a smaller value reduces the tolerance but may be sufficiently restrictive that a slow user mobile device 105 may not be able to keep up and produce the identifier quickly enough. In any event, the user is, in this example, permitted to produce a none of M+K since that is the actual current identifier, but cannot provide an identifier of M+K+1 for instance, since that identifier is not present. In some embodiments, the user mobile device 105 may even be prohibited from providing the nonce M+K and may be required to produce a nonce no larger than M+K-1 if it is assumed that the user mobile device 105 cannot legitimately produce the identifier so quickly. Indeed, in some examples, user mobile devices 105 that provide the nonce of M+K may be flagged as suspicious.

Note that because the nonce is encrypted (typically with padding or a salt), it is not possible for the user to simply increment the nonce to the correct value since the encryption cannot be performed by the user mobile device 105. This relies on a shared secret existing between the processing circuitry 135 of the kiosk and the verification circuitry 155. In addition, the use of a signature can be used to identify an attempt to modify the nonce and could therefore be used to identify suspicious attempts.

The above examples illustrate a process in which the signal is a QR code or other machine-readable image. However, in other embodiments, the signal could be a BlueTooth signal or other signal that is generally not considered to be perceptible to humans. An advantage of such a medium is that it can be interpreted more quickly (thereby making it possible for the identifier to be rotated more quickly to prevent piggybacking or relaying). Furthermore, since the signal cannot be perceived by a human it cannot easily be interpreted or modified by a human.

The above process describes a manner in which a user's geographical location can be verified without knowledge of the actual location by a user mobile device 105. Of course, various of the techniques can be provided in combination either to improve security or to provide a gradated confidence with which the user is present. For instance, meeting all of the security requirements might produce a high confidence while meeting some of the security requirements (e.g. producing the correct identifier from a non-local connection) might produce a lower confidence. Similarly, where fast rotation is used (as shown in Figure 8), the confidence can be predicted by the value of K, which indicates how quickly the user mobile device 105 correctly provided the identifier. Confidence could also be improved by providing a number of identifiers as illustrated in Figure 5. Indeed, both techniques could be combined to produce an average speed with which an identifier is produced. Furthermore, although the present techniques have described the use of one signal, it is possible for the system to output and the data processing apparatus to receive multiple signals - each producing a different identifier that is to be checked at the server.

The present technique can be used to handle tax free shopping. In particular, some jurisdictions allow travellers to recover the VAT paid on goods that are exported from the country. The present technique can therefore make it possible to only allow the tax refund if it can be verified that the user is at a particular location in a port - where a user is highly likely to board a vehicle leaving the country. For instance, the location could be set at the entrance to a plane or past security.The confidence can be used to control the degree of refund permitted without further investigation. For instance, a high confidence could allow the export of goods up to 5000 EUR, a medium confidence could allow the export of goods up to 1000 EUR and a low confidence could allow the export of goods up to 100 EUR. Attempts to export goods above these thresholds could require that the user sees a customs officer to confirm the exporting of the goods.

Other parameters may also factor into the confidence calculation. For instance, a user with a previous history of successful, valid exports might have their confidence increased. In contrast, a first time traveller or one with limited identification documentation might have their confidence decreased. This information can be accessed through the additional data provided by the user mobile device 105 to initiate the refund process. Similarly, in processes using different signals, different signals might be awarded (or might lead towards) different confidences. For instance, the collection of the identifier produced in a BlueTooth signal might improve the confidence more than the collection of an identifier produced by a QR code. The collection of both identifiers might produce an even higher confidence and the collection of neither could produce a lower (or zero) confidence.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments of the invention have been described in detail herein with reference to the accompanying drawings, it is to be understood that the invention is not limited to those precise embodiments, and that various changes, additions and modifications can be effected therein by one skilled in the art without departing from the scope and spirit of the invention as defined by the appended claims. For example, various combinations of the features of the dependent claims could be made with the features of the independent claims without departing from the scope of the present invention.

The present technique could be configured in any of the following ways:
(1) An apparatus comprising:
   a capture device configured to perform a capture operation on an environment local to the apparatus to produce an incoming signal;
   processing circuitry configured to perform processing of the incoming signal to produce an identifier; and
   communication circuitry configured to send the identifier to a server together with data that is separate from the identifier, wherein
   the communication circuitry is configured to transmit the identifier to the server within a predetermined period of the capture device having performed the capture operation.
(2) The apparatus according to (1), wherein
   the capture device is an image capture device and the incoming signal is an image; and
   the image comprises an optically machine-readable image.
(3) The apparatus according to (2), wherein
   the image comprises a barcode.
(4) The apparatus according to any one of (2)-(3), wherein
   the image comprises a 2D barcode.
(5) The apparatus according to any one of (1)-(4), wherein
   in response to the communication circuitry failing to send the identifier to the server together with the data within the predetermined period, the capture device is configured to perform the capture operation again.
(6) The apparatus according to any one of (1)-(5), wherein
   the capture device is configured to perform a plurality of capture operations in order to produce a series of incoming signals including the incoming signal;
   the processing circuitry is configured to perform processing of the series of incoming signals; and
   the processing circuitry is inhibited from transmitting the identifier until the identifier changes in the series of incoming signals.
(7) The apparatus according to any one of (1)-(6), wherein
   the capture device is configured to produce a series of incoming signals including the incoming signal;
   the processing circuitry is configured to perform processing of the series of incoming signals to produce a series of identifiers; and
   the processing circuitry is configured to transmit the series of identifiers to the server, wherein the series of the identifiers is contiguous.
(8) The apparatus according to any one of (1)-(7), wherein
   the communication circuitry is wireless communication circuitry that communicates with the server using WiFi.
(9) The apparatus according to (8), wherein
   the wireless communication circuitry is configured to connect to a base station that transmits below its maximum transmission power.
(10) The apparatus according to any one of (1)-(9), wherein
   the data comprises a value added tax in relation to goods held by the user.
(11) A method comprising:
   capturing an environment local to the apparatus to produce an incoming signal;
   processing the incoming signal to produce an identifier; and
   sending the identifier to a server together with data that is separate from the identifier, wherein
   the identifier is transmitted to the server within a predetermined period of the capturing.
(12) A system comprising:
   processing circuitry configured to perform processing of an identifier to generate a signal in which the identifier is encoded;
   an output device configured to output the signal; and
   output circuitry configured to output the identifier to verification circuitry, the verification circuitry being configured to perform a verification process comprising comparing the identifier received from the output circuitry with a candidate identifier received from a user, wherein
   the processing circuitry is configured to change the identifier with a predetermined frequency.
(13) The system according to (12), wherein
   the output device is a display device and the signal is an image; and
   the image comprises an optically machine-readable image.
(14) The system according to (13), wherein
   the image comprises a barcode.
(15) The system according to any one of (13)-(14), wherein
   the image comprises a 2D barcode.
(16) The system according to any one of (12)-(15), comprising:
   the verification circuitry, wherein
   the verification circuitry is configured to cause the processing circuitry to change the identifier and to regenerate the signal in response to the verification process being successful.
(17) The system according to any one of (12)-(15), comprising:
   the verification circuitry, wherein
   the verification circuitry is configured to cause the processing circuitry to change the identifier and to regenerate the signal in response to receiving a validation request from the user, regardless of an outcome of the verification process.
(18) The system according to any one of (12)-(17), wherein
   the identifier comprises a value that is one-way encrypted using a private key; and
   the comparing the identifier received from the output circuitry comprises measuring a distance between the value encrypted in the identifier received from the output circuitry and the value encrypted in the candidate identifier and asserting that there is a match in response to the distance being less than a predetermined distance.
(19) The system according to any one of (12)-(18), comprising:
   wireless communication circuitry configured to connect to the user and to receive a verification request, comprising the candidate identifier and data separate from the candidate identifier, from the user and to provide the candidate identifier to the verification circuitry.
(20) The system according to (19), wherein
   the wireless communication circuitry is configured to connect to the user via WiFi.
(21) The system according to any one of (19)-(20), wherein
   the verification process comprises determining whether the user connected via the wireless communication circuitry.
(22) The system according to (21), wherein
   the verification process determines that the user is connected via the wireless communication circuitry when the user is on a same subnet as the system.
(23) The system according to any one of (19)-(22), wherein
   the wireless communication circuitry is configured to connect to the user using a transmission power lower than a maximum transmission power.
(24) The system according to any one of (19)-(23) wherein
   the data separate from the candidate identifier comprises a value added tax for goods held by the user; and
   the verification circuitry is configured to cause the value added tax to be refunded by the user in response to the verification process being successful.
(25) A method comprising:
   performing processing of an identifier to generate a signal in which the identifier is encoded;
   outputting the signal;
   outputting the identifier to verification circuitry, the verification circuitry being configured to perform a verification process comprising comparing the identifier received from the output circuitry with a candidate identifier received from a user; and
   changing the identifier with a predetermined frequency.

## Claims

1. An apparatus comprising:
a capture device configured to perform a capture operation on an environment local to the apparatus to produce an incoming signal;
processing circuitry configured to perform processing of the incoming signal to produce an identifier; and
communication circuitry configured to send the identifier to a server together with data that is separate from the identifier, wherein
the communication circuitry is configured to transmit the identifier to the server within a predetermined period of the capture device having performed the capture operation.

2. The apparatus according to any preceding claim, wherein
in response to the communication circuitry failing to send the identifier to the server together with the data within the predetermined period, the capture device is configured to perform the capture operation again.

3. The apparatus according to any preceding claim, wherein
the capture device is configured to perform a plurality of capture operations in order to produce a series of incoming signals including the incoming signal;
the processing circuitry is configured to perform processing of the series of incoming signals; and
the processing circuitry is inhibited from transmitting the identifier until the identifier changes in the series of incoming signals.

4. The apparatus according to any preceding claim, wherein
the capture device is configured to produce a series of incoming signals including the incoming signal;
the processing circuitry is configured to perform processing of the series of incoming signals to produce a series of identifiers; and
the processing circuitry is configured to transmit the series of identifiers to the server, wherein the series of the identifiers is contiguous.

5. The apparatus according to any preceding claim, wherein
the communication circuitry is wireless communication circuitry that communicates with the server using WiFi.

6. The apparatus according to claim 5, wherein
the wireless communication circuitry is configured to connect to a base station that transmits below its maximum transmission power.

7. The apparatus according to any preceding claim, wherein
the data comprises a value added tax in relation to goods held by the user.

8. A method comprising:
capturing an environment local to the apparatus to produce an incoming signal;
processing the incoming signal to produce an identifier; and
sending the identifier to a server together with data that is separate from the identifier, wherein
the identifier is transmitted to the server within a predetermined period of the capturing.

9. A system comprising:
processing circuitry configured to perform processing of an identifier to generate a signal in which the identifier is encoded;
an output device configured to output the signal; and
output circuitry configured to output the identifier to verification circuitry, the verification circuitry being configured to perform a verification process comprising comparing the identifier received from the output circuitry with a candidate identifier received from a user, wherein
the processing circuitry is configured to change the identifier with a predetermined frequency.

10. The system according to claim 9, comprising:
the verification circuitry, wherein
the verification circuitry is configured to cause the processing circuitry to change the identifier and to regenerate the signal in response to the verification process being successful.

11. The system according to any claim 9, comprising:
the verification circuitry, wherein
the verification circuitry is configured to cause the processing circuitry to change the identifier and to regenerate the signal in response to receiving a validation request from the user, regardless of an outcome of the verification process.

12. The system according to any one of claims 9-11, wherein
the identifier comprises a value that is one-way encrypted using a private key; and
the comparing the identifier received from the output circuitry comprises measuring a distance between the value encrypted in the identifier received from the output circuitry and the value encrypted in the candidate identifier and asserting that there is a match in response to the distance being less than a predetermined distance.

13. The system according to any one of claims 9-12, comprising:
wireless communication circuitry configured to connect to the user and to receive a verification request, comprising the candidate identifier and data separate from the candidate identifier, from the user and to provide the candidate identifier to the verification circuitry.

14. The system according to claim 13, wherein
the wireless communication circuitry is configured to connect to the user via WiFi.

15. The system according to any one of claims 13-14, wherein
the verification process comprises determining whether the user connected via the wireless communication circuitry.

16. The system according to claim 15, wherein
the verification process determines that the user is connected via the wireless communication circuitry when the user is on a same subnet as the system.

17. The system according to any one of claims 13-16, wherein
the wireless communication circuitry is configured to connect to the user using a transmission power lower than a maximum transmission power.

18. The system according to any one of claims 13-17 wherein
the data separate from the candidate identifier comprises a value added tax for goods held by the user; and
the verification circuitry is configured to cause the value added tax to be refunded by the user in response to the verification process being successful.

19. A method comprising:
performing processing of an identifier to generate a signal in which the identifier is encoded;
outputting the signal;
outputting the identifier to verification circuitry, the verification circuitry being configured to perform a verification process comprising comparing the identifier received from the output circuitry with a candidate identifier received from a user; and
changing the identifier with a predetermined frequency.
